Europäisches Patentamt

European Patent Office

Office européen des brevets

(19)

(11) Publication number: **0 210 157 B1**

# EUROPEAN PATENT SPECIFICATION

(45) Date of publication of patent specification: **28.08.91**   (51) Int. Cl.⁵: **C08G 69/34**

(21) Application number: **86870093.1**

(22) Date of filing: **27.06.86**

The file contains technical information submitted
after the application was filed and not included in
this specification

(54) **Improved thixotropic agents, thixotropic paint compositions containing them, and process for preparing the same.**

(30) Priority: **28.06.85 GB 8516358**

(43) Date of publication of application:
**28.01.87 Bulletin 87/05**

(45) Publication of the grant of the patent:
**28.08.91 Bulletin 91/35**

(84) Designated Contracting States:
**AT BE CH DE FR GB IT LI LU NL SE**

(56) References cited:
**US-A- 3 224 893**
**US-A- 3 622 604**

**CHEMICAL ABSTRACTS, vol. 79, no. 1, 9th**
**July 1973, page 6900, abstract no. 6896z,**
**Columbus, Ohio, US; & CS-A-146 293 (K.**
**HAJEK et al.) 15-11-1972**

(73) Proprietor: **FINA RESEARCH S.A.**
**Zone Industrielle C**
**B-6520 Seneffe (Feluy)(BE)**

(72) Inventor: **van Berk, Peter**
**Wilhelminastraat 104**
**NL-2651 ES Berkel-Rodenrijs(NL)**
Inventor: **Verborgt, Jozef**
**Thamerhorn 82**
**NL-1421 Uithoorn(NL)**
Inventor: **Braeken, Jozef**
**Lindestraat 88**
**B-9470 Denderleeuw(BE)**

(74) Representative: **Leyder, Francis**
**c/o Fina Research S.A. Zone Industrielle C**
**B-6520 Feluy (Feluy)(BE)**

## Description

The present invention relates to the use of thixotropic agents and in particular to the use of novel polyamides, which when included in paint compositions give them improved thixotropic properties. The present invention is also concerned with the methods of preparation of these thixotropic agents.

The present invention also relates to improved thixotropic paint compositions containing the thixotropic agents of the invention, and to the methods for preparing them.

It is known in the paint-making art that thixotropy arises with the formation of hydrogen bonds, more particularly between C = O and either N - H or O - H groups in different molecules.

It is often desirable to use paints having thixotropic properties because such paints are more easy to use, since they have less tendency to sag, when applied to vertical substrates.

It is known to prepare thixotropic paints by incorporating therein solid additives such as glycerol trihydroxystearate (GTHS, also known as hydrogenated castor oil) or polyethylene wax, or their mixtures with an amide wax prepared at least partially with hydroxystearic acid (HSA). While these additives give some thixotropic properties to the paint compositions, they have various disadvantages.

Indeed, GTHS has an acceptable behaviour in paint systems under normal temperature conditions, but it does not inhibit seeding when processing or storage of the paint occurs above 50°C. In case of the use of GTHS-amide wax, temperature control during production is very critical.

To impart a desirable antisag effect, polyethylene wax has to be used in an amount such that a marked decrease in the gloss of the dry paint film is observed.

US-A-3,224,893 discloses polyamides from polyalkylene polyamines, hydroxy-monocarboxylic acid and polymeric fat acid, suitable as flexographic ink binders and claiming markedly improved low temperature solubility in alcohol solvents.

There is therefore a need in the art for novel thixotropic agents which when included in paint compositions give them improved antisag properties which are retained during storage of the paint compositions.

There is also a need for thixotropic agents which can be introduced into the paint compositions as a liquid by simple mixing so as to give the desired thixotropy to the compositions.

An object of the present invention is to provide paint compositions containing said agents and having improved thixotropic properties.

A further object is to provide thixotropic paint compositions which can be applied in relatively thick layers without sagging.

Still another object is to provide thixotropic paint compositions which can be processed at relatively high temperatures, or even applied to high temperature substrates without sagging.

Another object of the invention is to provide an improved thixotropic paint composition which is prepared by merely introducing a suitable thixotropic agent in the form of a liquid.

Still a further object is to provide a method for improving the thixotropic properties of paint compositions.

A further object is to provide an improved process for incorporating the thixotropic agent into the paint composition.

Accordingly, the present invention provides thixotropic agents comprising polyamides which are obtained by the reaction of

(i) one or more diamines selected from xylylene diamine and alpha-omega diaminoalkanes containing 4 to 8 carbon atoms: and

(ii) one or more omega hydroxy-substituted carboxylic acids of general formula $HO-C_nH_{2n}-COOH$, wherein $n = 1$ to 11, or the equivalent lactones, the molar ratio of the carboxylic acids to the diamines ranging from 1:1 to 2:3: and

(iii) dimer acids in such amount that the number of amine groups is about equal to the total number of carboxyl groups in compounds (ii) and (iii).

The thixotropic paint compositions of the present invention contain polyamides made by the reaction which is defined above.

The method of the invention for improving the thixotropic properties of a paint composition comprises adding to said composition up to 5 wt %, based on the weight of the composition, of the thixotropic agents according to the present invention.

The Applicant has now unexpectedly found that, by using as thixotropic agent the polyamides which are obtained by the reaction of

(i) one or more diamines selected from the group comprising xylylene diamine and alpha-omega diaminoalkanes containing 4 to 8 carbon atoms; and

(ii) one or more omega hydroxy-substituted carboxylic acids of general formula $HO - C_nH_{2n} - COOH$, wherein n = 1 to 11, or the equivalent lactones, the molar ratio of the carboxylic acids to the diamines ranging from 1:1 to 2:3, preferably about 1:1; and

(iii) dimer acids in such amount that the number of amine groups is about equal to the total number of carboxyl groups in compounds (ii) and (iii),

the thixotropic properties of paint compositions containing said agent are greatly improved.

This fact is really unexpected since it is well known in the art that amide waxes do not give satisfactory results unless submitted to optimal dispersion and swelling conditions.

The thixotropic agents of the invention are prepared by using diamines which are selected from xylylene diamine and alpha-omega diaminoalkanes containing 4 to 8 carbon atoms, and preferably from the latter diamines. As suitable diaminoalkanes. 1,4-diaminobutane and 1,6-diaminohexane (hereinafter called hexamethylene diamine or HMDA) may be cited.

The polymerised fatty acids, hereinafter called dimer acids, used for the preparation of the thixotropic agents of the present invention are usually mixtures of dimerised and trimerised unsaturated fatty acids. They are usually produced by catalytic self-condensation of unsaturated fatty acids, the latter being generally from glycerides of polymerisable fatty acids such as peanut, cottonseed, wheat soybean, corn, linseed, tung, dehydrated castor, perilla, conjugated linseed or other oils of the drying or semi-drying type, followed by optional hydrogenation of remaining double bonds. Dimer acids are well known in the art and they are commercially available; the preferred dimer acids are those obtained from fatty acids having about 18 or 20 carbon atoms and having therefore an acid value equal to about 190 mgKOH/g. Suitable examples of such dimer acids are Pripol 1014 (Pripol is a trade mark of Unichema), Pripol 1018 and Pripol 1040, the characteristics of which are summarised in Table I.

## TABLE I

|  | dicarboxylic acid (wt%) | tricarboxylic acid (wt%) | acid value (mg KOH/g) | 1 eq-COOH (g) |
|---|---|---|---|---|
| Pripol 1014 | 95 | 4 (*) | 193-198 | about 286 |
| Pripol 1018 | 81 | 19 | 190-198 | about 289 |
| Pripol 1040 | 19 | 81 | 183-191 | about 299 |
| | | (*) also contains 1wt% monomer | | |

Dimer acids consisting predominantly of dicarboxylic acids are preferred because they tend to give agents which impart better antisag properties after storage at elevated temperatures of the paint compositions which contain them.

The preparation of the thixotropic agents of the present invention also employs one or more omega hydroxy-substituted carboxylic acids of general formula $HO-C_nH_{2n}-COOH$, wherein n ranges from 1 to 11 and preferably from 3 to 5, or the equivalent lactones. Suitable hydroxyacids are 6-hydroxy hexanoic acid,4-hydroxy butyric acid, and other equivalent acids. Suitable lactones are gamma-butyrolactone, epsilon-caprolactone, and equivalent lactones.

It is to be understood that functionally equivalent derivatives of the reactants, capable of reacting to form the polyamides of the invention may be used instead of the reactants described herein.

For example, lower alkyl esters may be used in place of acids, whereby the by-product of the reaction is the corresponding alcohol (usually a $C_1$-$C_4$ alcohol) instead of water.

In accordance with an embodiment of the invention, in the preparation of the thixotropic agent, the reaction may be carried out in any inert solvent having a not too high boiling temperature so as to allow its elimination by distillation without decomposing the polyamides. Examples of suitable solvents are toluene or xylene.

Preferably, the reaction is carried out by heating and stirring under reflux, preferably up to the boiling temperature for kinetic reasons, under an atmosphere of an inert gas like nitrogen, helium or the like.

3

The reactants may be added in any sequence. It is also possible to introduce all the reactants simultaneously, either before or during heating. When the reactants are added during heating, they are preferably added slowly.

A person skilled in the art would know that certain reaction conditions are to be preferred in some cases. For example, a slight excess of up to 5% of acid groups may be necessary in order to ensure complete reaction of primary amine groups.

The course of the reaction may be followed by infra-red spectrometry or by measuring the acid number.

After completion of the reaction, the polyamide is recovered by suitable means, but preferably by distillation of the inert solvent and of any remaining by-product either under a stream of nitrogen or of any other inert gas like helium, or under reduced pressure.

The process of the present invention for incorporating the hereabove disclosed thixotropic agents into paint compositions comprises the steps of

(i) dissolving the thixotropic agents of the present invention into a suitable solvent heated as much as required;

(ii) optionally, heating up the solution and/or the mixture of the other components of the paint composition;

(iii) adding the solution to the mixture of the other components of the paint composition.

Suitable solvents for the thixotropic agents of the present invention include isobutanol, benzyl alcohol, cyclohexanone, N-methylpyrrolidone, dimethylformamide, propylene glycol ether or mixtures of these solvents, but other solvents may be contemplated.

However, the solvent used must be compatible with the other components of the paint composition: for example, isobutanol or benzyl alcohol are to be avoided with isocyanate-containing paint compositions.

This process is really unexpected since it is well known in the art that the thixotropic properties given by polyamides are adversely affected by polar groups contained in solvents or in blending resins.

The amount of thixotropic agents dissolved in a suitable solvent is generally at least 10% by weight, and preferably at least 20 wt %.

The solution may optionally be cooled down and stored after dissolving step (i). In some cases, especially when reaction solvents like toluene or xylene have not been completely distilled off, the solution shows a tendency to form a gel on storage, but this gel disappears on heating and does not interfere with the process of the present invention providing the gel is heated up until it disappears.

The temperature at which the solvent must be heated in step (i) depends on the solvent and on the polyamides. For example, gentle heating will usually be sufficient for a 25 wt % solution of the polyamides of the present invention in isobutanol.

The composition to which the solutions to be added usually does not have to be warmed-up.

After and sometimes during thorough mixing of the thixotropic agent in the paint composition, a thixotropic paint is obtained after a period of time which ranges from a few minutes to several hours, depending on several factors (among which are the nature of the resin, the mixing time and the temperature conditions) not all of which are understood.

The amount of thixotropic agent in the paint composition may be as high as 5 wt % (based on the weight of the composition) and varies with factors such as the desired effects (antisag properties, pigment antisettling properties), the properties of the suspension dispersion, the conditions in preparing the suspension, and the nature and amount of the other components of the paint composition. The minimum amount is readily determined by those skilled in the art by a few simple experiments. The thixotropic agent content in the paint composition is usually from 0.1 to 3 % by weight, based on the weight of the composition. However, below a minimum amount which is usually from 0.2 to 0.6 wt %, only pigment anti-settling properties are observed.

While it is preferable to use the process of the present invention for incorporating the thixotropic agents disclosed herein, it is also possible to incorporate them as a powdered solid. However, it is known in the art that the desired properties require optimal dispersion and swelling conditions which are obtained with difficulty and under restricted conditions when a powdered solid is used.

Persons skilled in the art know that, just before application, the paint compositions may have to be mixed with a suitable hardener.

The Applicant has found that the amount of thixotropic agents required may be split between the paint composition and the hardener, or even totally included into the hardener. Thus, it is possible to have two near-newtonian liquids which only acquire thixotropic properties after mixing. It is advantageous to be able to have newtonian liquids, since preparation of the paint base, sieving of the paint base, colour-matching, and mixing with the hardener are all easier than with thixotropic liquids.

4

The paint compositions of the present invention preferably comprise a resin system, one or several pigments and a thixotropic agent according to the present invention.

Suitable types of resin systems may be, but are not limited to, those based on epoxy resins, epoxyester resins, chlorinated rubber, polyester resins, acrylic or vinyltoluene-acrylic resins, alkyd resins, tributyltin-acrylate and methacrylate copolymers, or even latex based on vinylacetate or styrene-butylacrylate or pure acrylic emulsions.

The resin system generally comprises a solvent for the resin components. Typical examples of solvents used in the paint industry are aliphatic and aromatic solvents, alcohols, ketones, esters, glycol ethers, and the like. However, the paint system may also be solventless.

The paint compositions of the present invention may also comprise levelling agents, matting agents, pigments and other additives well known in the art.

The paint compositions of the present invention may be applied using a brush, a roller or a spray-gun, whether airless or not.

The following examples are intended to be illustrative and are not intended to limit the scope of the present invention.

Example 1

A. Preparation of the thixotropic agent

3.0 mol hexamethylene diamine (HMDA) and 3.0 mol epsilon-caprolactone (CL) were heated under reflux in 400 g boiling xylene for 30 minutes.

To the resultant cloudy mixture formed, 3.0 eq-COOH of Pripol 1018 were added. After 15 minutes, the mixture was clear.

During a further 4.5 h, the mixture was stirred and heated at 140-160°C under a nitrogen stream to distill off the reaction water and the xylene.

The thixotropic agent obtained according to this preparation method will hereinafter be called "A".

B. Incorporation into a paint composition

The thixotropic agent was dissolved in warm isobutanol to obtain a solution containing 25 wt % of agent. This solution was stable, as no gel or precipitate was observed after 6 months storage at room temperature.

Before addition of the thixotropic agent, the paint composition, which was of the epoxy-ester type, was as follows, and will be called paint base "I" hereinafter :

| | |
|---|---|
| - epoxyester resin having an epoxy equivalent of 750 | 30 wt% |
| - titanium dioxide TITANRKB-2 (Trade Mark of Bayer) | 20 wt% |
| - Al-Mg silicate ( <40 μm particle size) | 15 wt% |
| - Al silicate ( <20 μm particle size) | 15 wt% |
| - xylene | 20 wt% |

4 g of the solution, containing 1 g of the thixotropic agent, were added under stirring to 100 g of the composition described hereabove, both being at a temperature of about 20°C. After addition, the paint composition was thoroughly mixed by stirring for 2 minutes.

C. Viscosity measurements

Three days after preparation of the paint composition, stored at about 20°C, its viscosity was measured at 20°C in a rotary type viscosimeter.

The value determined after 30s high rotation was 9.1 Pa.s, whereas after 5s low rotation it was 38.4 Pa.s. The ratio of the low rotation viscosity to the high rotation viscosity, which shows the existence of some thixotropic properties and which is hereinafter called the thixotropy index, was therefore 4.2.

D. Fineness measurements

The method used was the classical Hegmann method.

The fineness measurements were carried out on the same day as the viscosity measurements, then again after 3 weeks storage at 60°C. Both determinations yielded values lower than 25 μm.

E. Mixture with a hardener

Five days after preparation of the paint composition, the paint composition having been stored at 20°C,

100 g of the paint composition including the thixotropic agent were mixed with 15 g of a xylene + isobutanol solution containing 50 wt % of a polyamidoamine having a N-H equivalent of 280 mgKOH/g, then left for 10 min at about 20°C.

F. Sag tests

After having prepared the mixture with the hardener as described hereabove, the sag test was carried out with a blade having 11 gaps increasing in 0.1 mm steps from 0.1 mm to 1.1 mm. With this blade, 11 wet strips of increasing thickness were applied to a metal plate which was then immediately placed in a vertical position.

No sagging occured when the plate was kept at about 20°C; the maximum dry-layer thickness was 500 $\mu$m.

This was also observed when the plate was kept at 45°C; maximum dry layer thickness was 350 $\mu$m.

When the plate was kept at 60°C, the maximum dry-layer thickness for which no sagging occurred was 125 $\mu$m.

The sag-tests were repeated after 3 weeks storage of the paint at 60°C. The maximum dry-layer thickness for which no sagging occured was respectively 190 $\mu$m at 20°C, 100 $\mu$m at 45°C and 80 $\mu$m at 60°C.

The above results, as well as the results of other examples and comparative examples are summarised in Table 2.

All have been carried out as explained in Example 1, except where otherwise mentioned below.

Comparative example 1

The some paint composition was prepared as in Example 1, however without addition of any thixotropic agent.

Examples 2 to 5

These examples, combined with Example 1 and Comparative example 1, show that a sufficient concentration of the thixotropic agent in the paint composition must be reached before the maximum value of the thixotropy index is attained. They also show that the thixotropic agent has a marked thickening effect in the paint composition.

In addition, three litres of the paint of Example 2, mixed with hardener according to the procedure described hereabove, were sprayed with an airless spray-gun on a vertical surface at a temperature of 20°C. A layer having a dry layer thickness of 500 $\mu$m was obtained without sagging.

TABLE 2

| a | b | c | d | e | f | g | h | ı | j | k | l | m | n | o |
|---|---|---|---|---|---|---|---|---|---|---|---|---|---|---|
| 1 | I | A | 1.0 | 38.4 | 9.1 | 4.2 | <25 | | >500 | >350 | 125 | 190 | 100 | 60 |
| 2 | I | A | 0.8 | 32.0 | 7.5 | 4.3 | <25 | | >300 | 210 | 135 | 175 | 100 | 65 |
| 3 | I | A | 0.6 | 8.0 | 2.5 | 3.2 | <25 | | 140 | 100 | 65 | 80 | 65 | 60 |
| 4 | I | A | 0.4 | | 1.2 | | <25 | | 45 | | | 75 | | |
| 5 | I | A | 0.2 | 1.4 | 0.85 | 1.6 | <25 | | 40 | | | 65 | | |
| 6 | I | B | 0.8 | 38.4 | 6.6 | 5.8 | <25 | | >450 | >350 | 160 | 300 | 65 | 60 |
| 7 | I | C | 0.8 | 32.0 | 5.0 | 6.4 | <25 | | >400 | >350 | 170 | <50 | | |
| 8 | I | D | 0.8 | 8.0 | 3.2 | 2.5 | <25 | | 100 | 65 | | 115 | 105 | 55 |
| C1 | I | - | 0 | 1.3 | 0.85 | 1.5 | <25 | | 40 | | | 40 | | |
| C2 | I | T | 0.8 | 19.2 | 4.1 | 4.7 | <25 | | 125 | 95 | 65 | 140 | 70 | 60 |
| C3 | I | Y | 0.8 | 12.8 | 5.5 | 2.3 | <25 | | 70 | | | 65 | | |
| C4 | I | Z | 0.8 | 8.0 | 3.0 | 2.7 | <35 | <25 | 65 | 65 | 60 | 60 | 40 | |
| 9 | II | A | 1.0 | 54.4 | 8.5 | 6.4 | <25 | | 550 | 550 | 220 | 400 | 120 | 100 |
| 10 | II | B | 1.0 | 62.4 | 7.7 | 8.1 | <25 | | 520 | 520 | 220 | 400 | 170 | 70 |
| 11 | II | C | 1.0 | 89.6 | 9.3 | 9.6 | <25 | | 520 | 510 | 500 | 180 | 50 | 50 |
| 12 | II | D | 1.0 | 25.6 | 6.9 | 3.7 | <25 | | 245 | 170 | 120 | 220 | 65 | |
| C5 | II | - | 0 | 4.8 | 2.1 | 2.3 | <25 | | 95 | 80 | 75 | 65 | 50 | |
| C6 | II | Y | 1.0 | 35.2 | 12.6 | 2.8 | <50 | <25 | 145 | 135 | 80 | 225 | 150 | 115 |
| C7 | II | Z | 1.0 | 57.6 | 9.4 | 6.1 | <25 | | 245 | 200 | 200 | 110 | 110 | |
| 13 | III | A | 0.9 | 12.8 | 3.6 | 3.6 | <20 | | 225 | 140 | 90 | 220 | 140 | 100 |
| 14 | III | D | 0.9 | 12.8 | 4.0 | 3.2 | <20 | | 265 | 135 | 85 | 220 | 130 | 100 |
| C8 | III | - | 0 | 3.2 | 1.2 | 2.6 | <20 | | 50 | | | | 55 | 55 |
| C9 | III | Y | 0.9 | 12.8 | 3.2 | 4.0 | >100 | | 50 | | | | | |
| C10 | III | Z | 0.9 | 9.6 | 2.0 | 4.8 | <40 | | 80 | 85 | 90 | 150 | 150 | 150 |

Key for Table 2

a :  Example number

b :  Identification of paint base

c :  Identification of thixotropic agent

d :  Concentration of thixotropic agent (wt % on the weight of
     paint base)

e :  Viscosity at low rotation, expressed in Pa.s

f :  Viscosity at high rotation, expressed in Pa.s

g :  Thixotropy index

h,i :  Fineness (expressed in μm) respectively before and after
       storage; only one figure given if unchanged.

j to o :  Maximum dry-layer thickness (expressed in μm) without
          sagging:

|                     | at 20°C | at 45°C | at 60°C |
|---------------------|---------|---------|---------|
| after 5 days at 20°C | j       | k       | l       |
| 3 weeks at 60°C later | m      | n       | o       |

Examples 6 and 7

The preparation method for thixotropic agents "B" and "C" was the same as in Example 1. However Pripol 1014 and Pripol 1040 respectively were used instead of Pripol 1018.

These Examples, combined with Example 2, show the influence of the oligomer acid, used for preparing the thixotropic agent, on the properties of the paint composition. Although a better thixotropy index is obtained with Pripol 1040, Pripol 1014 (having 95% dimer content) appears to give better overall properties, especially when considering sag-tests after storage at elevated temperature.

Example 8

A. Preparation of thixotropic agent "D"

0.3 mol HMDA and 0.4 eq.-COOH of Pripol 1018 were heated in 80 g boiling xylene, for 2.5 hours at 153-163°C under reflux and under a nitrogen stream, eliminating the reaction water by azeotropic distillation.

Subsequently, 0.2 mol CL were added and the mixture was heated at about 160°C under nitrogen for 1 hour, then the xylene was distilled off.

B. Preparation of a 25 wt % solution of "D"

The thixotropic agent was dissolved in warm isobutanol to obtain a solution containing 25 wt % of agent. This solution was stable at room temperature for at least 6 months.

C. Spraying test

Using the mixture of the point composition with the hardener prepared as described above, a dry layer thickness of 165 μm was obtained after an air spraying test on a vertical surface at 55°C.

Comparative example 2

0.8 g of THIXATROL ST (an organic derivative of castor oil; Thixatrol is a trade name of NL Industries), herein called thixotropic agent "T", were incorporated into 100 g of paint base "I" according to the recommended procedure.

Using the mixture of the paint composition with the hardener prepared as described above, a dry-layer thickness of 500 μm was obtained after an airless spraying test on a vertical surface at 20°C, and a dry-layer thickness of 135 μm was obtained after an air spraying test on a vertical surface at 55°C.

Comparative example 3

A. Preparation of thixotropic agent "Y"

0.2 mol HMDA and 0.4 mol CL were heated under reflux in 50 g boiling xylene for 30 minutes.

After cooling, a precipitate was obtained which was isolated, then washed with an aliphatic hydrocarbon solvent (boiling range 100-140°C) and dried till constant weight, giving a white product.

B. Incorporation into a paint composition

The white product was dissolved in isobutanol at about 100°C to form a solution containing 25 wt % of thixotropic agent.

This solution was added at a temperature of 60°C to the paint base, which was also warmed up to a temperature of 60°C, while stirring thoroughly. After 2 minutes mixing, the paint composition was stored at 60°C for about 30 minutes.

Comparative example 4

A. Preparation of thixotropic agent "Z"

0.2 mol HMDA and 0.2 mol CL were heated under reflux in 50 g boiling xylene for 30 minutes, then 0.2 mol 12-hydroxystearic acid were added and the reaction carried on for a further 10 minutes.

During a further 2 h, the mixture was stirred and heated at 165-167°C under a nitrogen stream to distill off the reaction water, then the xylene was removed by vacuum distillation.

B. Incorporation into a paint composition

The thixotropic agent was dissolved at 60°C in benzyl alcohol, to form a solution containing 25 wt % of agent.

This solution was added at a temperature of 60°C to the paint base, which was also warmed up to a temperature of 60°C, while stirring thoroughly. Mixing was continued for 2 minutes, although thixotropic properties were obviously developing, and the paint composition was stored at 60°C for about 30 minutes.

Examples 9 to 12, and Comparative examples 5 to 7

A. Paint base "II"

The following paint base was used, hereinafter called "II":

| | |
|---|---|
| - Epikote 828 (Trade Mark for an epoxy resin having 0.51-0.55 epoxy equivalents per 100 g) | 30 wt % |
| - Epikote 1001 (Trade Mark for an epoxy resin having 0.20-0.22 epoxy equivalents per 100 g) | 7.5 wt % |
| - Titanium dioxide (TITANRKB-2 from BAYER) | 10 wt % |
| - Al-Mg silicate (< 40 μm particle size) | 10 wt % |
| - quartz powder (< 20 μm particle size) | 30 wt % |
| - xylene | 12.5 wt % |

B. Tests

The tests were carried out as described in Example 1, however the hardener used was a polyamidoamine, having a NH equivalent of 130 mg KOH/g, of which 23 g were added to 100 g of paint base.

The results were similar to those reached hereabove with paint base "I": the best overall test results were reached with thixotropic agent "B".

C. Spraying tests

Two paint compositions, one containing 1 wt % of thixotropic agent "A" and the other containing 1 wt % of Thixatrol ST (serving as a comparison), were mixed with hardener (as hereabove described) and sprayed with an air spray gun on a vertical surface at 55°C. Dry-layer thickness of respectively 275 $\mu$m and 140 $\mu$m were obtained.

Examples 13 and 14, and Comparative examples 8 to 10

A. Paint base "III"

The following paint base was used, hereinafter called "III":

| | |
|---|---|
| - Epikote 1007 (Trade Mark; an epoxy resin having 0.36 OH equivalents per 100 g) | 15 wt % |
| - Titanium dioxide by BAYER RKB-2 | 10 wt % |
| - Synthetic BaSO$_4$ (< 30 μm particle size) | 20 wt % |
| - Al-Mg silicate (< 40 μm particle size) | 15 wt % |
| - methyl-isobutyl-ketone | 15 wt % |
| - xylene | 25 wt % |

B. Incorporation of the thixotropic agents

Each thixotropic agent was dissolved in boiling cyclohexanone to form a solution containing 25 wt % of agent.

Each solution was kept at 60°C and was added under stirring to paint base "III", which was also kept at 60°C. After addition, the paint composition was thoroughly mixed by stirring for 2 minutes, then kept at 60°C for a further 30 minutes.

C. Tests

The tests were carried out as described in Example 1. However, the hardener used was an isocyanate type hardener which is commercially available under the Trade Name DESMODUR-VL (Bayer) and having an isocyanate equivalency of 140. The hardener and the paint composition were mixed in a weight ratio of 8.5:100.

Examples 15 and 16

The procedure of Example 9 was repeated. However the reactants used in the preparation of the thixotropic agent were added in a different order, i.e.:

- 0.3 eq.-COOH of Pripol 1018 and 0.3 mol HMDA were heated under reflux in boiling xylene before addition of 0.3 mol CL (Example 15);

- 0.3 mol HMDA were added to a mixture of 0.3 mol CL and 0.3 eq.-COOH of Pripol 1018 in boiling xylene, (Example 16)

The maximum dry-layer thicknesses obtained were :

|  | at 20°C | at 60°C |
| --- | --- | --- |
| Example 15 | 550 $\mu$m | 230 $\mu$m |
| Example 16 | 600 $\mu$m | 240 $\mu$m |

Comparing with Example 9 (Table 2, columns j and l), these results show that the order of reaction has little influence on the properties of the final paint composition.

Example 17

0.25 g of thixotropic agent "A" were added, in the form of a solution in 0.75 g isobutanol, to 100 g of paint base "I". The resulting paint composition showed practically no increase of viscosity or thixotropy index when compared to paint base "I".

0.40 g of thixotropic agent "A" were added, in the form of a solution in 1.05 g isobutanol, to 15 g of the hardener solution as described in Example 1. The resulting solution was stable, as no gel was observed after 3 months storage at room temperature.

The paint composition and the hardener prepared as hereabove described were thoroughly mixed and then left for 10 minutes at about 20°C. The resulting mixture showed definite thixotropic properties, and the results of the sag tests were equivalent to those obtained in Example 3.

**Claims**
**Claims for the following Contracting States: BE CH DE FR GB IT LI LU NL SE**

1. Use as additive for imparting thixotropic properties to paint compositions of the polyamide which is obtainable by the reaction of :
   (i) one or more diamines selected from xylylene diamine and alpha-omega diaminoalkanes containing 4 to 8 carbon atoms; and
   (ii) one or more omega hydroxy-substituted carboxylic acids of general formula $HO-C_nH_{2n}-COOH$, wherein n = 1 to 11, or the equivalent lactones, the molar ratio of the carboxylic acids to the diamines ranging from 1:1 to 2:3; and
   (iii) dimer acids, in such amount that the number of amine groups is about equal to the total number of carboxyl groups in compounds (ii) and (iii)

2. Use according to Claim 1 wherein the diamine is selected from alpha-omega diaminoalkanes containing 4 to 8 carbon atoms.

3. Use according to Claim 1 or Claim 2, wherein in the omega hydroxy-substituted carboxylic acids of general formula $HO-C_nH_{2n}-COOH$ or the equivalent lactones, n is from 3 to 5.

4. Use according to Claim 1, Claim 2 or Claim 3, wherein the carboxylic acid comprises 6-hydroxyhexanoic acid or the corresponding epsilon-caprolactone.

5. Use according to any foregoing Claim, wherein the molar ratio of the hydroxy carboxylic acids to the diamines is about 1:1.

6. Use according to any foregoing Claim wherein the dimer acids comprise predominantly dicarboxylic acids.

7. Use as additive for imparting thixotropic properties to paint compositions of the polyamide which is obtainable by the reaction of :
   (i) hexamethylene diamine, and
   (ii) 6-hydroxyhexanoic acid, or the corresponding epsilon-caprolactone, the molar ratio of the 6-hydroxyhexanoic acid or the corresponding epsilon-caprolactone to the diamine being about 1:1; and
   (iii) dimer acids containing predominantly dicarboxylic acids and having an acid number of about 190 mg KOH/g, in such amount that the number of amine groups is about equal to the total number of carboxyl groups in compounds (ii) and (iii).

8. Use according to any foregoing Claim, wherein up to 5% by weight, based on the weight of the composition, of a polyamide as set forth in any one of Claims 1 to 7, is incorporated in said compositions.

9. Use according to Claim 8, wherein from 0.1 to 3% by weight, based on the weight of the composition, of a polyamide as set forth in any one of Claims 1 to 7, is incorporated in said compositions.

10. Process for incorporating into paint compositions a polyamide as set forth in any one of Claims 1 to 7, the process comprising the steps of :
    (i) dissolving said polyamide into a solvent which is heated as much as required; and
    (ii) adding the solution which is obtained in dissolving step (i) to the mixture of the other components of the paint composition.

11. Process according to Claim 10, wherein before the solution is added to the mixture in step (ii), the mixture is heated to a desired temperature.

12. Process according to Claim 10 or Claim 11, further comprising the step, after dissolving step (i), of cooling down, storing and re-heating the solution obtained in dissolving step (i).

13. Process according to Claim 10, Claim 11 or Claim 12, wherein the solvent is isobutanol, benzyl alcohol, cyclohexanone, N-methylpyrrolidone, dimethylformamide, propylene glycol ether, or a mixture of any of those compounds.

14. Process according to any one of Claims 10 to 13, wherein the amount of polyamide dissolved in the solvent is at least 10% by weight.

15. Process according to Claim 14, wherein the amount of polyamide dissolved in the solvent is at least 20 wt %.

**Claims for the following Contracting State: AT**

1. Process for imparting thixotropic properties to paint compositions by incorporating therein a polyamide which is obtainable by the reaction of :
   (i) one or more diamines selected from xylylene diamine and alpha-omega diaminoalkanes containing 4 to 8 carbon atoms; and
   (ii) one or more omega hydroxy-substituted carboxylic acids of general formula $HO-C_nH_{2n}-COOH$, wherein $n = 1$ to 11, or the equivalent lactones, the molar ratio of the carboxylic acids to the diamines ranging from 1:1 to 2:3; and
   (iii) dimer acids, in such amount that the number of amine groups is about equal to the total number of carboxyl groups in compounds (ii) and (iii)

2. Process according to Claim 1 wherein the diamine is selected from alpha-omega diaminoalkanes containing 4 to 8 carbon atoms.

3. Process according to Claim 1 or Claim 2, wherein in the omega hydroxy-substituted carboxylic acids of general formula HO-$C_nH_{2n}$-COOH or the equivalent lactones, n is from 3 to 5.

4. Process according to Claim 1, Claim 2 or Claim 3, wherein the carboxylic acid comprises 6-hydroxyhexanoic acid or the corresponding epsilon-caprolactone.

5. Process according to any foregoing Claim, wherein the molar ratio of the hydroxy carboxylic acids to the diamines is about 1:1.

6. Process according to any foregoing Claim wherein the dimer acids comprise predominantly dicarboxylic acids.

7. Process for imparting thixotropic properties to paint compositions by incorporating therein a polyamide which is obtainable by the reaction of :
    (i) hexamethylene diamine, and
    (ii) 6-hydroxyhexanoic acid, or the corresponding epsilon-caprolactone, the molar ratio of the 6-hydroxyhexanoic acid or the corresponding epsilon-caprolactone to the diamine being about 1:1; and
    (iii) dimer acids containing predominantly dicarboxylic acids and having an acid number of about 190 mg KOH/g, in such amount that the number of amine groups is about equal to the total number of carboxyl groups in compounds (ii) and (iii).

8. Process according to any foregoing Claim, wherein up to 5% by weight, based on the weight of the composition, of a polyamide as set forth in any one of Claims 1 to 7, is incorporated in said compositions.

9. Process according to Claim 8, wherein from 0.1 to 3% by weight, based on the weight of the composition, of a polyamide as set forth in any one of Claims 1 to 7, is incorporated in said compositions.

10. Process for incorporating into paint compositions a polyamide as set forth in any one of Claims 1 to 7, the process comprising the steps of :
    (i) dissolving said polyamide into a solvent which is heated as much as required; and
    (ii) adding the solution which is obtained in dissolving step (i) to the mixture of the other components of the paint composition.

11. Process according to Claim 10, wherein before the solution is added to the mixture in step (ii), the mixture is heated to a desired temperature.

12. Process according to Claim 10 or Claim 11, further comprising the step, after dissolving step (i), of cooling down, storing and re-heating the solution obtained in dissolving step (i).

13. Process according to Claim 10, Claim 11 or Claim 12, wherein the solvent is isobutanol, benzyl alcohol, cyclohexanone, N-methylpyrrolidone, dimethylformamide, propylene glycol ether, or a mixture of any of those compounds.

14. Process according to any one of Claims 10 to 13, wherein the amount of polyamide dissolved in the solvent is at least 10% by weight.

15. Process according to Claim 14, wherein the amount of polyamide dissolved in the solvent is at least 20 wt %.


**Revendications**
**Revendications pour les Etats contractants suivants: BE CH DE FR GB IT LI LU NL SE**

1. Utilisation comme additif destiné à conférer des propriétés thixotropes à des compositions de peinture, du polyamide que l'on obtient en faisant réagir :
    (i) une ou plusieurs diamines choisies parmi la xylylènediamine et des α,ω-diaminoalcanes contenant de 4 à 8 atomes de carbone ; et

(ii) un ou plusieurs acides ω-carboxyliques substitués par un groupe hydroxyle, répondant à la formule générale HO-$C_n$-$H_{2n}$-COOH, dans laquelle n = 1 à 11, ou les lactones équivalentes, le rapport molaire des acides carboxyliques aux diamines étant situé dans l'intervalle allant de 1:1 à 2:3 ; et

(iii) des acides dimères en une quantité telle que le nombre des groupes d'amine soit à peu près égal au nombre total des groupes carboxyle dans les composés (ii) et (iii).

2.  Utilisation selon la revendication 1, dans laquelle la diamine est choisie parmi les α - ω-diaminoalcanes contenant de 4 à 8 atomes de carbone.

3.  Utilisation selon la revendication 1 ou 2, dans laquelle, dans les acides carboxyliques substitués par un groupe hydroxyle répondant à la formule générale HO-$C_nH_{2n}$-COOH ou dans les lactones équivalentes, n représente un chiffre de 3 à 5.

4.  Utilisation selon la revendication 1, 2 ou 3, dans laquelle l'acide carboxylique est constitué de l'acide 6-hydroxyhexanoïque ou de l'ε-caprolactone correspondante.

5.  Utilisation selon l'une quelconque des revendications précédentes, dans laquelle le rapport molaire des acides hydroxy-carboxyliques aux diamines est d'environ 1:1.

6.  Utilisation selon l'une quelconque des revendications précédentes, dans laquelle les acides dimères sont constitués principalement d'acides dicarboxyliques.

7.  Utilisation comme additif destiné à conférer des propriétés thixotropes à des compositions de peinture, du polyamide que l'on peut obtenir en faisant réagir :
    (i) l'hexaméthylènediamine, et
    (ii) l'acide 6-hydroxyhexanoïque ou l'ε-caprolactone correspondante, le rapport molaire de l'acide 6-hydroxyhexanoïque ou de l'ε-caprolactone correspondante à la diamine étant de 1:1 ; et
    (iii) des acides dimères contenant principalement des acides dicarboxyliques et ayant un indice d'acide d'environ 190 mg KOH/g, en une quantité telle que le nombre de groupes d'amine soit à peu près égal au nombre total des groupes carboxyles au sein des composés (ii) et (iii).

8.  Utilisation selon l'une quelconque des revendications précédentes, dans laquelle on incorpore dans ces compositions jusqu'à 5% en poids, basé sur le poids de la composition, d'un polyamide tel que présenté dans l'une quelconque des revendications 1 à 7.

9.  Utilisation selon la revendication 8, dans laquelle on incorpore dans ces compositions de 0,1 à 3% en poids, basé sur le poids de la composition, d'un polyamide tel que présenté dans l'une quelconque des revendications 1 à 7.

10. Procédé destiné à incorporer au sein de compositions de peinture, un polyamide tel que présenté dans l'une quelconque des revendications 1 à 7, ce procédé comprenant les étapes consistant à :
    (i) dissoudre le polyamide dans un solvant que l'on chauffe autant qu'il le faut ; et
    (ii) ajouter la solution que l'on obtient dans l'étape (i) de dissolution au mélange des autres constituants de la composition de peinture.

11. Procédé selon la revendication 10, dans lequel, avant d'ajouter la solution au mélange de l'étape (ii), on chauffe le mélange à la température désirée.

12. Procédé selon la revendication 10 ou 11, comprenant, en outre, suite à l'étape (i) de dissolution, l'étape consistant à refroidir, à entreposer et à réchauffer, à nouveau, la solution obtenue au cours de l'étape (i) de dissolution.

13. Procédé selon la revendication 10, 11 ou 12, dans lequel le solvant est : l'isobutanol, l'alcool benzylique, la cyclohexanone, la N-méthylpyrrolidone, le diméthylformamide, l'éther de propylèneglycol ou un mélange de n'importe lequel de ces composés.

14. Procédé selon l'une quelconque des revendications 10 à 13, dans lequel la quantité de polyamide dissoute dans le solvant est d'au moins 10% en poids.

15. Procédé selon la revendication 14, dans lequel la quantité de polyamide dissoute dans le solvant est d'au moins 20% en poids.

**Revendications pour l'Etat contractant suivant: AT**

1. Procédé destiné à conférer des propriétés thixotropes à des compositions de peinture en y incorporant un polyamide que l'on obtient en faisant réagir :

   (i) une ou plusieurs diamines choisies parmi la xylylènediamine et les $\alpha,\omega$-diaminoalcanes contenant de 4 à 8 atomes de carbone ; et

   (ii) un ou plusieurs acides $\omega$-carboxyliques substitués par un groupe hydroxyle, répondant à la formule générale $HO-C_n-H_{2n}-COOH$, dans laquelle n = 1 à 11, ou les lactones équivalentes, le rapport molaire des acides carboxyliques au diamines étant situé dans l'intervalle allant de 1:1 à 2:3 ; et

   (iii)des acides dimères en une quantité telle que le nombre des groupes d'amine soit à peu près égal au nombre total des groupes carboxyle dans les composés (ii) et (iii).

2. Procédé selon la revendication 1, dans lequel la diamine est choisie parmi les $\alpha$ -$\omega$-diaminoalcanes contenant de 4 à 8 atomes de carbone.

3. Procédé selon la revendication 1 ou 2, dans lequel, dans les acides carboxyliques substitués par un groupe hydroxyle répondant à la formule générale $HO-C_nH_{2n}-COOH$ ou les lactones équivalentes, n représente un chiffre de 3 à 5.

4. Procédé selon la revendication 1, 2 ou 3, dans lequel l'acide carboxylique est constitué de l'acide 6-hydroxyhexanoïque ou de l'$\epsilon$-caprolactone correspondante.

5. Procédé selon l'une quelconque des revendications précédentes, dans lequel le rapport molaire des acides hydroxy-carboxyliques aux diamines est d'environ 1:1.

6. Procédé selon l'une quelconque des revendications précédentes, dans lequel les acides dimères sont constitués principalement d'acides dicarboxyliques.

7. Procédé destiné à conférer des propriétés thixotropes à des compositions de peinture, en y incorporant un polyamide que l'on peut obtenir en faisant réagir :

   (i) l'hexaméthylènediamine, et

   (ii) l'acide 6-hydroxyhexanoïque ou l'$\epsilon$-caprolactone correspondante, le rapport molaire de l'acide 6-hydroxyhexanoïque ou de l'$\epsilon$-caprolactone correspondante à la diamine étant de 1:1 ; et

   (iii)des acides dimères contenant principalement des acides dicarboxyliques et ayant un indice d'acide d'environ 190 mg KOH/g, en une quantité telle que le nombre de groupes d'amine soit à peu près égal au nombre total des groupes carboxyles au sein des composés (ii) et (iii).

8. Procédé selon l'une quelconque des revendications précédentes, dans lequel on incorpore dans ces compositions jusqu'à 5% en poids, basé sur le poids de la composition, d'un polyamide tel que présenté dans l'une quelconque des revendications 1 à 7.

9. Procédé selon la revendication 8, dans lequel on incorpore dans ces compositions de 0,1 à 3% en poids, basé sur le poids de la composition, d'un polyamide tel que présenté dans l'une quelconque des revendications 1 à 7.

10. Procédé destiné à incorporer au sein de compositions de peinture, un polyamide tel que présenté dans l'une quelconque des revendications 1 à 7, ce procédé comprenant les étapes consistant à :

    (i) dissoudre le polyamide dans un solvant que l'on chauffe autant qu'il le faut ; et

    (ii) ajouter la solution que l'on obtient dans l'étape (i) de dissolution au mélange des autres constituants de la composition de peinture.

11. Procédé selon la revendication 10, dans lequel, avant d'ajouter la solution au mélange de l'étape (ii), on chauffe le mélange à la température désirée.

12. Procédé selon la revendication 10 ou 11, comprenant, en outre, suite à l'étape (i) de dissolution, l'étape consistant à refroidir, à entreposer et à réchauffer, à nouveau, la solution obtenue au cours de l'étape (i) de dissolution.

13. Procédé selon la revendication 10, 11 ou 12, dans lequel le solvant est : l'isobutanol, l'alcool benzylique, la cyclohexanone, la N-méthylpyrrolidone, le dimethylformamide, l'ether de propylèneglycol ou un mélange de n'importe lequel de ces composés.

14. Procédé selon l'une quelconque des revendications 10 à 13, dans lequel la quantité de polyamide dissoute dans le solvant est d'au moins 10% en poids.

15. Procédé selon la revendication 14, dans lequel la quantité de polyamide dissoute dans le solvant est d'au moins 20% en poids.

**Patentansprüche**
**Patentansprüche für folgende Vertragsstaaten: BE CH DE FR GB IT LI LU NL SE**

1. Verwendung des Polyamids als Additiv um Farbzusammensetzungen thixotrope Eigenschaften zu verleihen, das erhältlich ist durch die Umsetzung von:
   (i) einem oder mehreren Diaminen, ausgewählt aus Xylylendiamin und alpha-omega-Diaminoalkanen, enthaltend 4 bis 8 Kohlenstoffatome; und
   (ii) einer oder mehreren omega-hydroxysubstituierten Carbonsäuren der allgemeinen Formel $HO-C_nH_{2n}-COOH$, wobei n = 1 bis 11 ist, oder der äquivalenten Lactone, wobei das Molverhältnis der Carbonsäuren zu den Diaminen von 1:1 bis 2:3 reicht; und
   (iii) Dimersäuren in solch einer Menge, daß die Anzahl der Aminogruppen etwa der Gesamtzahl der Carboxylgruppen in den Verbindungen (ii) und (iii) gleich ist.

2. Verwendung nach Anspruch 1, wobei das Diamin aus alpha-omega-Diaminoalkanen ausgewählt ist, die 4 bis 8 Kohlenstoffatome enthalten.

3. Verwendung nach Anspruch 1 oder Anspruch 2, wobei in den omega-hydroxy-substituierten Carbonsäuren der allgemeinen Formel $HO-C_nH_{2n}-COOH$ oder der äquivalenten Lactone n 3 bis 5 ist.

4. Verwendung nach Anspruch 1, Anspruch 2 oder Anspruch 3, wobei die Carbonsäure 6-Hydroxyhexansäure oder das korrespondierende epsilon-Caprolacton umfaßt.

5. Verwendung nach einem der vorhergehenden Ansprüche, wobei das Molverhältnis der Hydroxycarbonsäuren zu den Diaminen etwa 1:1 ist.

6. Verwendung nach einem der vorhergehenden Ansprüche, wobei die Dimersäuren überwiegend Dicarbonsäuren umfassen.

7. Verwendung des Polyamids als Additiv um Farbzusammensetzungen thixotrope Eigenschaften zu verleihen, das erhältlich ist durch die Umsetzung von:
   (i) Hexamethylendiamin, und
   (ii) 6-Hydroxyhexansäure oder des korrespondierenden epsilon-Caprolactons, wobei das Molverhältnis der 6-Hydroxyhexansäure oder des korrespondierenden epsilon-Caprolactons zum Diamin etwa 1:1 ist; und
   (iii) Dimersäuren, enthaltend vorwiegend Dicarbonsäuren und mit einer Säurezahl von etwa 190 mg KOH/g, in solch einer Menge, daß die Anzahl der Aminogruppen der Gesamtzahl der Carboxylgruppen in den Verbindungen (ii) und (iii) etwa gleich ist.

8. Verwendung nach einem der vorhergehenden Ansprüche, wobei bis zu 5 Gewichts-%, bezogen auf das Gewicht der Zusammensetzung, eines Polyamids nach einem der Ansprüche 1 bis 7 in die Zusammensetzungen eingebracht sind.

9. Verwendung nach Anspruch 8, wobei 0,1 bis 3 Gewichts-%, bezogen auf das Gewicht der Zusammensetzung, eines Polyamids nach einem der Ansprüche 1 bis 7 in die Zusammensetzungen eingebracht sind.

10. Verfahren zum Einbringen eines Polyamids nach einem der Ansprüche 1 bis 7 in Farbzusammensetzungen, wobei das Verfahren die Stufen aufweist:

(i) Auflösen des Polyamids in einem Lösungsmittel, das so weit erhitzt wird, wie es erforderlich ist, und

(ii) Hinzufügen der in der Auflöse-Stufe (i) erhaltenen Lösung zum Gemisch der anderen Komponenten der Farbzusammensetzung.

11. Verfahren nach Anspruch 10, wobei das Gemisch auf eine gewünschte Temperatur erhitzt wird, bevor die Lösung zum Gemisch in Stufe (ii) zugefügt wird.

12. Verfahren nach Anspruch 10 oder Anspruch 11, das nach der Auflöse-Stufe (i) eine weitere Stufe umfaßt, und zwar Abkühlen, Lagern und Wiedererhitzen der in der Auflöse-Stufe (i) erhaltenen Lösung.

13. Verfahren nach Anspruch 10, Anspruch 11 oder Anspruch 12, wobei das Lösungsmittel Isobutanol, Benzylalkohol, Cyclohexanon, N-Methylpyrrolidon, Dimethylformamid, Propylenglycolether oder ein Gemisch jeder dieser Verbindungen ist.

14. Verfahren nach einem der Ansprüche 10 bis 13, wobei die Menge an Polyamid, die im Lösungsmittel gelöst sind, mindestens 10 Gewichts-% ist.

15. Verfahren nach Anspruch 14, wobei die Menge an Polyamid, die im Lösungsmittel gelöst sind, mindestens 20 Gewichts-% ist.

**Patentansprüche für folgenden Vertragsstaat: AT**

1. Verfahren, um Farbzusammensetzungen durch das Einbringen eines Polyamids thixotrope Eigenschaften zu verleihen, das erhältlich ist durch die Umsetzung von:

(i) einem oder mehreren Diaminen, ausgewählt aus Xylylendiamin und alpha-omega-Diaminoalkanen, enthaltend 4 bis 8 Kohlenstoffatome; und

(ii) einer oder mehreren omega-hydroxysubstituierten Carbonsäuren der allgemeinen Formel HO-$C_nH_{2n}$-COOH, wobei n = 1 bis 11 ist, oder der äquivalenten Lactone, wobei das Molverhältnis der Carbonsäuren zu den Diaminen von 1:1 bis 2:3 reicht; und

(iii) Dimersäuren in solch einer Menge, daß die Anzahl der Aminogruppen etwa der Gesamtzahl der Carboxylgruppen in den Verbindungen (ii) und (iii) gleich ist.

2. Verfahren nach Anspruch 1, wobei das Diamin aus alpha-omega-Diaminoalkanen ausgewählt ist, die 4 bis 8 Kohlenstoffatome enthalten.

3. Verfahren nach Anspruch 1 oder Anspruch 2, wobei in den omega-hydroxy-substituierten Carbonsäuren der allgemeinen Formel HO-$C_nH_{2n}$-COOH oder der äquivalenten Lactone n 3 bis 5 ist.

4. Verfahren nach Anspruch 1, Anpruch 2 oder Anspruch 3, wobei die Carbonsäure 6-Hydroxyhexansäure oder das korrespondierende epsilon-Caprolacton umfaßt.

5. Verfahren nach einem der vorhergehenden Ansprüche, wobei das Molverhältnis der Hydroxycarbonsäuren zu den Diaminen etwa 1:1 ist.

6. Verfahren nach einem der vorhergehenden Ansprüche, wobei die Dimersäuren überwiegend Dicarbonsäuren umfassen.

7. Verfahren, um Farbzusammensetzungen durch das Einbringen eines Polyamids thixrotrope Eigenschaften zu verleihen, das erhältlich ist durch die Umsetzung von:

(i) Hexamethylendiamin, und

(ii) 6-Hydroxyhexansäure oder des korrespondierenden epsilon-Caprolactons, wobei das Molverhält-

17

nis der 6-Hydroxyhexansäure oder des korrespondierenden epsilon-Caprolactons zum Diamin etwa 1:1 ist; und

(iii) Dimersäuren, enthaltend vorwiegend Dicarbonsäuren und mit einer Säurezahl von etwa 190 mg KOH/g, in solch einer Menge, daß die Anzahl der Aminogruppen der Gesamtzahl der Carboxylgruppen in den Verbindungen (ii) und (iii) etwa gleich ist.

8. Verfahren nach einem der vorhergehenden Ansprüche, wobei bis zu 5 Gewichts-%, bezogen auf das Gewicht der Zusammensetzung, eines Polyamids nach einem der Ansprüche 1 bis 7 in die Zusammensetzungen eingebracht sind.

9. Verfahren nach Anspruch 8, wobei 0,1 bis 3 Gewichts-%, bezogen auf das Gewicht der Zusammensetzung, eines Polyamids nach einem der Ansprüche 1 bis 7 in die Zusammensetzungen eingebracht sind.

10. Verfahren zum Einbringen eines Polyamids nach einem der Ansprüche 1 bis 7 in Farbzusammensetzungen, wobei das Verfahren die Stufen aufweist:
    (i) Auflösen des Polyamids in einem Lösungsmittel, das so weit erhitzt wird, wie es erforderlich ist, und
    (ii) Hinzufügen der in der Auflöse-Stufe (i) erhaltenen Lösung zum Gemisch der anderen Komponenten der Farbzusammensetzung.

11. Verfahren nach Anspruch 10, wobei das Gemisch auf eine gewünschte Temperatur erhitzt wird, bevor die Lösung zum Gemisch in Stufe (ii) zugefügt wird.

12. Verfahren nach Anspruch 10 oder Anspruch 11, das nach der Auflöse-Stufe (i) eine weitere Stufe umfaßt, und zwar Abkühlen, Lagern und Wiedererhitzen der in der Auflöse-Stufe (i) erhaltenen Lösung.

13. Verfahren nach Anspruch 10, Anspruch 11 oder Anspruch 12, wobei das Lösungsmittel Isobutanol, Benzylalkohol, Cyclohexanon, N-Methylpyrrolidon, Dimethylformamid, Propylenglycolether oder ein Gemisch jeder dieser Verbindungen ist.

14. Verfahren nach einem der Ansprüche 10 bis 13, wobei die Menge an Polyamid, die im Lösungsmittel gelöst sind, mindestens 10 Gewichts-% ist.

15. Verfahren nach Anspruch 14, wobei die Menge an Polyamid, die im Lösungsmittel gelöst sind, mindestens 20 Gewichts-% ist.